# EUROPÄISCHE PATENTSCHRIFT

(11) **EP 3 196 496 B1**
(45) Veröffentlichungstag und Bekanntmachung des Hinweises auf die Patenterteilung: **26.09.2018**
(21) Anmeldenummer: 16204561.1
(22) Anmeldetag: 16.12.2016
(51) Int. Cl.: F16D 48/02

(54) **HYDRAULIKANORDNUNG FÜR EINEN KRAFTFAHRZEUGANTRIEBSSTRANG**
HYDRAULIC ASSEMBLY FOR A MOTOR VEHICLE DRIVE TRAIN
SYSTÈME HYDRAULIQUE POUR UNE TRANSMISSION DE VÉHICULE AUTOMOBILE

(30) Priorität: 22.12.2015 DE 102015122574
(43) Veröffentlichungstag der Anmeldung: 26.07.2017
(73) Patentinhaber: GETRAG B.V. & Co. KG, 74199 Untergruppenbach (DE)
(72) Erfinder: Rühle, Günter, 74369 Löchgau (DE); Kohlhaas, Stefan, 46562 Voerde (DE); Castan, Reiner, 71711 Steinheim (DE)
(74) Vertreter: Rausch, Gabriele

(56) Entgegenhaltungen:
- EP-A1- 1 614 920
- EP-A2- 2 930 388
- DE-A1- 10 120 882
- DE-A1-102011 122 878
- JP-A- S5 891 929

## Beschreibung

Die vorliegende Erfindung betrifft eine Hydraulikanordnung für einen Kraftfahrzeugantriebsstrang, der eine mit Kühlfluid zu versorgende und mittels eines Hydraulikaktuators zu betätigende Komponente aufweist, insbesondere eine nass laufende Lamellenkupplungsanordnung, mit einer Fluidversorgungseinrichtung, mit einer Steuerventilanordnung, die an die Fluidversorgungseinrichtung angeschlossen ist und dazu ansteuerbar ist, den Hydraulikaktuator mit einem Steuerdruck zu versorgen, um die Komponente zu betätigen, und mit einer Kühlfluidventilanordnung, die an die Fluidversorgungseinrichtung angeschlossen ist und dazu ansteuerbar ist, um die Komponente bei Bedarf an einem Kühlanschluss mit Kühlfluid zu versorgen.

Siehe DE10120882 und EP2930388 als nächstliegender Stand der Technik.

Ferner betrifft die vorliegende Erfindung ein Antriebsstrang mit einer nass laufenden Lamellenkupplung und mit einer solchen Hydraulikanordnung. Ferner betrifft die vorliegende Erfindung ein Verfahren zum Betreiben einer Komponente eines Antriebsstranges, die mit Kühlfluid zu versorgen und mittels eines Hydraulikaktuators zu betätigen ist.

Moderne Antriebsstränge für Kraftfahrzeuge verwenden Komponenten, die zum einen hydraulisch mittels eines Hydraulikaktuators zu betätigen sind und die zum anderen mittels eines Kühlfluides, insbesondere eines Hydraulikfluides, zu kühlen sind. Ein Beispiel einer derartigen Komponente ist eine nass laufende Lamellenkupplung. Derartige nass laufende Lamellenkupplungen werden beispielsweise als Anfahr- und Trennkupplungen in Doppelkupplungsgetrieben verbaut. Hydraulisch betätigte Lamellenkupplungen ermöglichen ein feinfühliges Einstellen des übertragenen Drehmomentes, sodass eine Lastübergabe von einem Teilgetriebe auf das andere Teilgetriebe eines Doppelkupplungsgetriebes komfortabel realisierbar ist. Die Kühlfunktion ermöglicht dabei, die nass laufende Lamellenkupplung auch im Schlupfbetrieb für längere Zeiträume zu betreiben, beispielsweise beim Anfahren an einem Berg, da die Kühlung die im Schlupf entstehende Reibungswärme effizient abführen kann.

Hydraulikanordnungen der eingangs genannten Art beinhalten häufig eine Fluidversorgungseinrichtung, bei der mittels einer Arbeits- bzw. Leitungsdruckventilanordnung aus einem Pumpendruck ein im Wesentlichen konstanter Leitungsdruck erzeugt wird. Die Pumpe kann daher nach der Art eines Nebenantriebes von einem Verbrennungsmotor angetrieben sein. In derartigen Fällen ist eine proportionale Steuerventilanordnung zum Ansteuern eines Hydraulikaktuators häufig an diesen Leitungsdruck angeschlossen, um hieraus einen von einer übergeordneten Steuereinrichtung vorgegebenen Steuerdruck für den Hydraulikaktuator zu erzeugen. Die Steuerventilanordnung ist dabei in der Regel direkt oder indirekt elektrisch angesteuert, beispielsweise über einen Elektromagneten.

Alternativ ist es auch bekannt, einen Steuerdruck für einen Hydraulikaktuator direkt am Druckanschluss einer Pumpe bereitzustellen, die in diesem Fall elektromotorisch angesteuert wird, sodass der Steuerdruck über die Drehzahl der Pumpe geregelt werden kann.

Die Kühlfluidventilanordnung kann ein einfaches Wegeventil sein, ist jedoch vorzugsweise ein proportionales Wege- bzw. Schieberventil, sodass eine Kühlfluidversorgung in Form eines Kühlfluidstromes angepasst an den Bedarf bereitgestellt werden kann. Eine zu hohe Kühlfluidversorgung kann nämlich zu unnötigen Schleppverlusten führen. Eine zu geringe Kühlfluidversorgung kann zu einem Ausfall der Komponente führen.

Die Komponente kann mittels eines mechanischen Energiespeichers wie einer Feder in eine Betätigungsposition vorgespannt sein, beispielsweise in eine geöffnete Position ("normally open").

Aus dem Dokument DE 10 2012 003 328 A1 ist ein Verfahren zum Ansteuern einer Kupplung bekannt, wobei bei Auftreten eines schwerwiegenden Fehlers die Komponente nicht nur passiv mittels des Energiespeichers sondern aktiv mittels eines Hydraulikaktuators in einen sicheren Betätigungszustand überführt wird.

Bei manchen Hydraulikanordnungen ist in der Steuerventilanordnung eine redundante Abschaltfunktion in Form eines vorgelagerten Druckregelventils vorgesehen. Wenn dieses Druckregelventil unbetätigt ist oder bei Betätigung nicht reagiert, öffnet ein zwischen der Steuerventilanordnung (Kupplungsdruckregelventil) und einem Kupplungskolben (Hydraulikaktuator) angeschlossenes Ventil gegen einen Niederdruckbereich. Hierdurch wird der Hydraulikaktuator entleert, sodass die Komponente mittels der Feder einen sicheren Zustand schneller erreichen kann.

Ein solches Ventil, das zwischen dem Hydraulikaktuator und der Steuerventilanordnung angeschlossen ist, kann auch als Abschaltventil bezeichnet werden, das aktiv in einen Zustand gebracht wird, bei dem es die Steuerventilanordnung mit dem Hydraulikaktuator verbindet, und bei fehlender Ansteuerung den Hydraulikaktuator mit einem Niederdruckbereich wie einem Tank verbindet. Das Absperrventil ist dabei in der Regel als einfaches Wegeventil ausgebildet, im Gegensatz zu der Steuerventilanordnung, die in der Regel ein proportionales Ventil beinhaltet. Das Absperrventil kann dabei elektrisch betätigt sein, oder mittels eines Pilotventils indirekt elektrisch betätigt sein.

In manchen Fällen ist zwischen der Steuerventilanordnung und einer Fluidversorgungseinrichtung ein solchen Absperrventil ("cut-off-Ventil") angeordnet.

Die oben beschriebenen Hydraulikanordnungen verwenden eine große Vielzahl an Ventilen, was die Kosten und den Montageaufwand erhöht. Dies gilt insbesondere für den Fall, dass der Antriebsstrang ein Doppelkupplungsgetriebe aufweist, bei dem zwei zu betreibende Komponenten wie Lamellenkupplungen axial hintereinander angeordnet sind. Denn in diesem Fall werden die Lamellenkupplungen in der Regel mittels jeweils eigener Kühlfluidventilanordnungen mit Kühlfluid versorgt. Auch Abschaltventile sind in diesem Fall in der Regel für jede Lamellenkupplung separat vorgesehen.

Neben den hierdurch bedingten hohen Kosten ist auch eine übergeordnete Steuereinrichtung (Getriebe- Steuergerät) hierbei aufwändig, da dann eine entsprechende Anzahl von Ventilstrom-Treibern vorgesehen werden muss, einschließlich zugehöriger Verkabelung, Steckern, etc.

Es ist vor diesem Hintergrund eine Aufgabe der Erfindung, eine verbesserte Hydraulikanordnung für einen Kraftfahrzeugantriebsstrang, einen verbesserten Kraftfahrzeugantriebsstrang sowie ein verbessertes Verfahren zum Betreiben einer Komponente eines Antriebsstranges anzugeben.

Diese Aufgabe wird bei der eingangs genannten Hydraulikanordnung dadurch gelöst, dass die Hydraulikanordnung ferner eine Entleerungsventilanordnung aufweist, die an den Hydraulikaktuator angeschlossen ist und bei Bedarf den Hydraulikaktuator entleert, wobei die Kühlfluidventilanordnung und die Entleerungsventilanordnung ein gemeinsames Ventil aufweisen, das in einer ersten Ventilstellung die Fluidversorgungseinrichtung mit der Komponente verbindet, um diese mit Kühlfluid zu versorgen, und das in einer zweiten Ventilstellung den Hydraulikaktuator mit einem Niederdruckbereich wie einem Tank verbindet, um den Hydraulikaktuator zu entleeren.

Ferner wird die obige Aufgabe gelöst durch einen Antriebsstrang mit einer nass laufenden Lamellenkupplung und einer erfindungsgemäßen Hydraulikanordnung. Schließlich wird die obige Aufgabe gelöst durch ein Verfahren zum Betreiben einer Komponente eines Antriebsstranges, die mit Kühlfluid zu versorgen und mittels eines Hydraulikaktuators zu betätigen ist, insbesondere mit einer Hydraulikanordnung der erfindungsgemäßen Art, mit den Schritten, ein Ventil dazu anzusteuern, die Komponente mit Kühlfluid zu versorgen, wenn die Komponente einen Bedarf an Kühlfluid hat, und dasselbe Ventil dazu zu verwenden, den Hydraulikaktuator zu entleeren, wenn die Komponente zu entlasten ist.

Bei der erfindungsgemäßen Hydraulikanordnung können folglich die Funktionen einer Kühlfluidversorgungseinstellung und einer Entleerung in einem Ventil integriert werden was die Gesamtanzahl der in der Hydraulikanordnung zu verwendenden Ventile reduziert, bei entsprechender Reduzierung der Treiber und Verkabelung etc. in einer übergeordneten Steuereinrichtung.

Unter einem Entleeren des Hydraulikaktuators wird vorliegend verstanden, dass ein Druck in dem Hydraulikaktuator schnell abgebaut werden kann, indem der Hydraulikaktuator (in der Regel ein Zylinderraum des Hydraulikaktuators) mit einem Niederdruckbereich wie einem Tank verbunden wird.

Die zu betreibende Komponente ist vorzugsweise eine nass laufende Lamellenkupplung. Der Hydraulikaktuator ist vorzugsweise ein einfach wirkender Hydraulikzylinder, dessen Kolben auf die Komponente (beispielsweise das Lamellenpaket) wirkt, wobei der Kolben mittels einer Feder in eine Ausgangsposition vorgespannt ist, bei der die Komponente in einer sicheren Position ist (zum Beispiel als Lamellenkupplung geöffnet ist).

In der ersten Ventilstellung (III) ist der Hydraulikaktuator vorzugsweise nicht mit dem Niederdruckbereich verbunden, sodass der Hydraulikaktuator mit dem Steuerdruck versorgt werden kann, um die Komponente zu betätigen. Die Verbindung des Hydraulikaktuators mit dem Niederdruckbereich in der zweiten Ventilstellung (I) beinhaltet vorzugsweise, dass ein mit dem Hydraulikaktuator verbundener Anschluss der Steuerventilanordnung ebenfalls mit dem Niederdruckbereich verbunden ist, sodass selbst dann, wenn die Steuerventilanordnung, beispielsweise in einem Störfall, einen hohen Hydraulikdruck bereitstellen sollte, dieser über das gemeinsame Ventil unmittelbar abgebaut werden kann.

Ein Querschnitt der Verbindung zwischen dem Hydraulikaktuator und dem Niederdruckbereich ist in der zweiten Ventilstellung (I) vorzugsweise folglich so, dass auch ein hoher von der Steuerventilanordnung bereitgestellter Druck und ein entsprechender Volumenstrom hin zu dem Niederdruckbereich abgeführt werden kann, ohne das sich ein Druck an dem Hydraulikaktuator aufbauen kann.

In der zweiten Ventilstellung ist die Fluidversorgungseinrichtung vorzugsweise nicht mit der Komponente verbunden, sodass der Komponente in der zweiten Ventilstellung vorzugsweise kein Kühlfluid zugeführt wird.

Das gemeinsame Ventil ist vorzugsweise in die zweite Ventilstellung (I) vorgespannt, sodass dann, wenn das gemeinsame Ventil nicht angesteuert ist, der Komponente vorzugsweise kein Kühlöl zugeführt wird und der Hydraulikaktuator entleert wird.

Die Ansteuerung des gemeinsamen Ventils ist vorzugsweise so, dass ein Bereitstellen eines Kühlfluidstromes nur dann möglich ist, wenn das gemeinsame Ventil aktiv angesteuert wird.

Bei dem erfindungsgemäßen Antriebsstrang ist es bevorzugt, wenn dieser zwei axial versetzt zueinander angeordnete nass laufende Lamellenkupplungen aufweist, wobei die Hydraulikanordnung in diesem Fall für jede der nass laufenden Lamellenkupplungen eine Steuerventilanordnung und ein gemeinsames Ventil aufweist, sodass die zwei Lamellenkupplungen vollkommen unabhängig voneinander angesteuert bzw. gekühlt werden können.

Die Steuerventilanordnung beinhaltet vorzugsweise ein proportional ansteuerbares Ventil, um den Steuerdruck feinfühlig regeln zu können. Es versteht sich, dass es ferner bevorzugt ist, wenn der Steuerdruck gemessen wird und einer übergeordneten Steuereinrichtung zugeführt wird, um den Steuerdruck rückgekoppelt regeln zu können.

Das gemeinsame Ventil von Kühlfluidventilanordnung und Entleerungsventilanordnung ist vorzugsweise ebenfalls als proportionales Ventil ausgebildet, sodass eine genaue Steuerung des Kühlvolumenstromes möglich ist. Der Kühlvolumenstrom kann entweder einfach gesteuert sein, oder aber über eine geeignete Messung geregelt werden.

Die Fluidversorgungseinrichtung weist vorzugsweise eine Pumpenanordnung auf, die eine von einem Verbrennungsmotor angetriebene Pumpe und/oder eine von einem Elektromotor angetriebene Pumpe beinhalten kann. Der von der Pumpenanordnung bereitgestellte Druck kann mittels einer Arbeits- bzw. Leitungsdruckventilanordnung auf einen konstanten Leitungsdruck geregelt werden, an den die Steuerventilanordnung direkt anschließbar sein kann.

Für die Anbindung der Fluidversorgungseinrichtung an die Kühlfluidventilanordnung kann eine separate Kühlfluiddruckventilanordnung vorgesehen sein, die einen Kühlfluiddruck aus dem Leitungsdruck ableitet, ggf. jedoch auch einen Kühlfluiddruck bzw. einen Kühlfluidstrom unmittelbar aus einem Druckanschluss der Pumpenanordnung bereitstellen kann.

Die Aufgabe wird vollkommen gelöst.

Gemäß einer besonders bevorzugten Ausführungsform weist das gemeinsame Ventil einen einzelnen Ventilschieber auf, der in die erste oder in die zweite Ventilstellung versetzbar ist.

Der Ventilschieber ist vorzugsweise einstückig ausgebildet und weist vorzugsweise wenigstens zwei axial versetzte Steuernuten auf, die so ausgebildet sind, dass die oben beschriebenen Funktionen in optimaler Weise erfüllt werden können.

Erfindungsgemäss weist das gemeinsame Ventil eine zwischen der ersten und der zweiten Ventilstellung liegende dritte Ventilstellung auf.

In der dritten Ventilstellung (II) können entweder sämtliche Anschlüsse des gemeinsamen Ventils abgesperrt sein. Dies ermöglicht es, das gemeinsame Ventil so auszugestalten, dass in der dritten Ventilstellung keine Schleppverluste in der Kupplung entstehen, da in der dritten Ventilstellung die Verbindung zwischen der Fluidversorgungseinrichtung und der Komponente abgesperrt ist.

Die Hydraulikanordnung kann ferner eine Absperrventilanordnung aufweisen, mittels der die Steuerventilanordnung gegenüber der Fluidversorgungseinrichtung absperrbar ist.

Unter einer derartigen Absperrung wird verstanden, dass unabhängig von der Position der Steuerventilanordnung kein Steuerdruck für den Hydraulikaktuator bereitgestellt werden kann, und zwar in einer Variante vorzugsweise selbst dann, wenn sich das gemeinsame Ventil in einer Ventilstellung befindet, bei der der Hydraulikaktuator von dem Niederdruckbereich getrennt ist.

Eine derartige Absperrventilanordnung kann dabei zwischen der Fluidversorgungseinrichtung und der Steuerventilanordnung vorgesehen sein. In diesem Fall ist vorteilhaft, dass aus einer Leitungsdruckventilanordnung kein Fluidstrom entnommen wird, was sich positiv auf die hydraulischen Verluste auswirken kann.

In einer alternativen Ausgestaltung kann die Absperrventilanordnung jedoch auch zwischen der Steuerventilanordnung und dem Hydraulikaktuator angeordnet sein.

Insgesamt ist es jedoch bevorzugt, wenn die Absperrventilanordnung in das gemeinsame Ventil integriert ist.

In dieser Ausführungsform ist es von besonderem Vorzug, wenn die Absperrfunktion in der zweiten Ventilstellung (I) eingerichtet ist. In dieser Position, bei der der Hydraulikaktuator mit dem Niederdruckbereich verbunden ist, ist der Hydraulikaktuator folglich nicht mit der Steuerventilanordnung verbunden.

Ferner ist es bevorzugt, wenn in sämtlichen anderen Ventilstellungen die Steuerventilanordnung mit der Fluidversorgungseinrichtung verbunden ist.

Generell ist es möglich, dass das gemeinsame Ventil direkt elektrisch angesteuert ist, insbesondere elektromagnetisch gesteuert ist.

In diesem Fall kann auf einen vorgesteuerten Ventilschieber verzichtet werden, um auf diese Weise entsprechende Steuer- und Leckagevolumenströme zu minimieren.

In einer alternativen Ausgestaltung kann das gemeinsame Ventil mittels eines Pilotventils hydraulisch gesteuert sein.

Bei dieser Ausgestaltung kann ein Ventilschieber des gemeinsamen Ventils einen größeren Wegbereich abdecken, sodass die Funktionsvielfalt und/oder die Größe der zulässigen Volumenströme optimierbar sind.

Gemäß einer weiteren insgesamt bevorzugten Ausführungsform ist in einer weiteren Ventilstellung eine Verbindung zwischen dem Hydraulikaktuator und dem Kühlanschluss hergestellt.

Die Verbindung zwischen dem Hydraulikaktuator und dem Kühlanschluss ist dabei vorzugsweise mit einem sehr kleinen Querschnitt ausgestaltet, nach der Art einer Leckage bzw. Blende. Die Leckage kann dazu verwendet werden, das Regeln kleiner Steuerdrücke durch die Steuerventilanordnung zu optimieren.

Es ist ferner bevorzugt, wenn in sämtlichen anderen Ventilstellungen keine Verbindung zwischen dem Hydraulikaktuator und dem Kühlanschluss hergestellt ist.

Ferner ist es insgesamt bevorzugt, wenn das gemeinsame Ventil als 4/3-Wegeventil oder als 5/3-Wegeventil oder als 4/4-Wegeventil ausgebildet ist.

Der Begriff des Wegeventils soll den Begriff eines Schieberventils beinhalten. Die Wegeventile können jeweils als proportionale Wegeventile ausgestaltet sein.

Gemäß einer weiteren bevorzugten Ausführungsform, die in Verbindung mit dem Oberbegriff des Anspruchs 1 eine eigene Erfindung darstellt, weisen die Kühlfluidventilanordnung und eine Vorsteuerventilanordnung ein gemeinsames Ventil auf, das in einer ersten Ventilstellung (III) die Fluidversorgungseinrichtung mit der Komponente verbindet, um diese mit Kühlfluid zu versorgen, und das in einer zweiten Ventilstellung (I) ein Sperr- und/oder Entleerungsventil ansteuert, sodass die Steuerventilanordnung gegenüber der Fluidversorgungseinrichtung abgesperrt ist, und/oder dazu ansteuert, dass das Sperr- und/oder Entleerungsventil den Hydraulikaktuator entleert.

Das Sperr- und/oder Entleerungsventil kann dabei zwischen der Fluidversorgungseinrichtung und einer Steuerventilanordnung angeordnet sein, oder zwischen der Steuerventilanordnung und dem Hydraulikaktuator.

Von besonderem Vorzug ist es, wenn bei dieser Ausgestaltung die Kühlfluidventilanordnung dazu ausgebildet ist, einen Kühlfluidstrom für zwei radial ineinander verschachtelte Lamellenkupplungen bereitzustellen, also einen einzelnen Kühlfluidvolumenstrom für beide Kupplungen, was auf Grund der radialen Ausrichtung der Lamellenkupplungen möglich ist. Zum anderen ist es hierbei bevorzugt, wenn das Sperr- und/oder Entleerungsventil so ausgestaltet ist, dass die Steuerventilanordnungen der zwei Lamellenkupplungen gleichzeitig gegenüber der Fluidversorgungseinrichtung abgesperrt werden, und/oder die Hydraulikaktuatoren beider Lamellenkupplungen in einer Ventilstellung des Sperr- und/oder Entleerungsventils gleichzeitig entleert werden.

Bei der vorliegenden Erfindung wird vorzugsweise wenigstens einer der nachstehenden Vorteile und/oder Merkmale realisiert. Zum einen kann die Anzahl der benötigten Ventile für axial hintereinander angeordnete Lamellenkupplungen minimiert werden, wobei die beiden Kupplungen unabhängig voneinander kühlbar sind. Ein Kupplungsentleervorgang kann beschleunigt werden.

Eine Entleerung des Ventils wird in der Regel in einer Grundstellung der Steuerventilanordnung zum einen über die Steuerventilanordnung selbst ermöglicht. Ferner ist es mit dem gemeinsamen Ventil, das die Funktion der Entleerungsventilanordnung nachbildet, möglich, einen redundanten (zusätzlichen) Entleerungspfad für die Komponente zu erzeugen.

In manchen Ausführungsformen kann auf vorgesteuerte Ventilschieber verzichtet werden, um Steuer- und Leckagevolumenströme zu minimieren.

In manchen Ausführungsformen können eine Kühlfluidregelfunktion und eine redundante Hydraulikaktuator-Entleerungsfunktion in einem Bauteil in Form eines gemeinsamen Ventils vereinigt werden, wodurch Ventile eingespart werden können. Dies ist vorzugsweise möglich, weil eine offene und eine "momentfreie" Kupplung nur einen gewissen Grundkühlfluidstrom benötigt. Für die kurze Zeit eines Schaltvorganges bei einem Doppelkupplungsgetriebe sollte der Kühlfluidvolumenstrom sogar vorzugsweise unterbrochen sein, damit ein kühlfluidbedingtes Schleppmoment ein zu synchronisierenden Moment an einer Synchron-Schaltkupplung eines Getriebes des Kraftfahrzeugantriebsstranges nicht unnötig erhöht.

Das gemeinsame Ventil soll die Entleerungszeit der Komponente bzw. von deren Hydraulikaktuator reduzieren, indem ein zusätzlicher und sehr großer Durchfluss-Querschnitt freigegeben werden kann.

Im Falle eines klemmenden oder ausgefallenen Steuerventils (Kupplungsdruck-Regelventil) kann das gemeinsame Ventil einen ungewollten Steuerdruck in den Niederdruckbereich entlasten, sodass an der Komponente kein signifikanter Steuerdruck und vorzugsweise kein übertragbares Moment entstehen.

Vorzugsweise verbindet das gemeinsame Ventil in einer Grundstellung den Hydraulikaktuator mit dem Niederdruckbereich (Tankdruck), sodass ein Druckaufbau in der Komponente (Lamellenkupplung) nicht stattfinden kann. Da eine drucklosgeschaltete und somit momentenfreie Kupplung im Regelfall keine Kühlung braucht, ist in dieser Schaltstellung der Kühlfluidvolumenstrom abgeschaltet. Alternativ kann durch eine geeignete Steuerkanten-Positionierung eines Ventilschiebers des gemeinsamen Ventils ein minimaler Grundvolumenkühlstrom eingestellt werden.

In einer mittleren (dritten) Ventilstellung (II) wird die Tankentlastung vorzugsweise verschlossen, und es wird vorzugsweise eine Bedruckung des Hydraulikaktuators über die Steuerventilanordnung ermöglicht.

In der ersten Ventilstellung (III) des gemeinsamen Ventils wird die Fluidversorgungseinrichtung mit einem Kühlanschluss der Komponente verbunden, das gemeinsame Ventil gibt folglich vorzugsweise einen zum Öffnungsquerschnitt proportionalen Volumenstrom zur Kühlung der Komponente frei.

Ein Ventilschieber des gemeinsamen Ventils wird vorzugsweise durch einen Proportionalmagneten betätigt, und kann beliebige Zwischenpositionen zwischen zwei oder drei Hauptpositionen bzw. Ventilstellungen annehmen. Insbesondere kann ein proportionaler Zusammenhang zwischen Volumenstrom und elektrischem Ventilstrom im gesamten Bereich der ersten Ventilstellung realisiert werden.

Ferner kann die Hydraulikanordnung insgesamt mit weniger Komponenten realisiert werden. Es ergibt sich vorzugsweise eine schnellere Entleerungszeit des Hydraulikaktuators, da vorzugsweise zwei Pfade von dem Hydraulikaktuator zu einem Niederdruckbereich eingerichtet werden, und zwar über das gemeinsame Ventil einerseits und über die Steuerventilanordnung andererseits. Beim Befüllen des Hydraulikaktuators ergibt sich vorzugsweise ein geringerer Durchflusswiederstand, da zwischen dem Hydraulikaktuator und der Steuerventilanordnung vorzugsweise kein Absperrventil angeordnet werden und durchströmt werden muss.

In einer bevorzugten Variante kann durch eine geeignete Positionierung von Steuerkanten eines Ventilschiebers des gemeinsamen Ventils eine "abschaltbare" Leckage in die Kupplungsstrecke integriert werden. Folglich kann in dieser bevorzugten Variante die Dämpfung der Kupplungsregelstrecke in einem gewissen Rahmen beeinflussbar sein, wobei die Grenzen hier vorzugsweise durch den Kupplungskühlungsbedarf gesetzt sind.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Kraftfahrzeugantriebstranges mit einer erfindungsgemäßen Hydraulikanordnung;
- Fig. 2: eine schematische Längsschnittansicht durch ein gemeinsames Ventil der Hydraulikanordnung der Fig. 1 in drei Ventilstellungen;
- Fig. 3: ein Diagramm von Öffnungsquerschnitten über elektrischem Ventilstrom für das gemeinsame Ventil der Fig. 2;
- Fig. 4: eine Abwandlung des gemeinsamen Ventils der Fig. 2 und 3 mit einer hydraulischen Vorsteuerung;
- Fig. 5: eine Abwandlung des gemeinsamen Ventils der Fig. 2 und 3 bei Einrichtung einer Blendenfunktion;
- Fig. 6: eine schematische Längsschnittansicht durch das gemeinsame Ventil der Fig. 5;
- Fig. 7: ein Diagramm von Öffnungsquerschnitten über elektrischem Ventilstrom für das in den Fig. 5 und 6 gezeigte gemeinsame Ventil einer erfindungsgemäßen Hydraulikanordnung;
- Fig. 8: eine weitere Variante eines gemeinsamen Ventils einer erfindungsgemäßen Hydraulikanordnung;
- Fig. 9: eine schematische Längsschnittansicht durch das Ventil der Fig. 8 in drei Ventilstellungen;
- Fig. 10: ein Diagramm von Öffnungsquerschnitten über elektrischem Ventilstrom für das Ventil der Fig. 8 und 9;
- Fig. 11: eine weitere Variante eines gemeinsamen Ventils für eine erfindungsgemäße Hydraulikanordnung;
- Fig. 12: eine schematische Längsschnittansicht des gemeinsamen Ventils der Fig. 11 in vier verschiedenen Ventilstellungen;
- Fig. 13: ein Diagramm von Öffnungsquerschnitten über elektrischem Ventilstrom für das in den Fig. 11 und 12 gezeigte gemeinsame Ventil; und
- Fig. 14: eine schematische Darstellung einer weiteren Ausführungsform einer erfindungsgemäßen Hydraulikanordnung gemäß einem zweiten Aspekt, bei der eine Kühlfluidventilanordnung und eine Vorsteuerventilanordnung ein gemeinsames Ventil aufweisen, das ein Sperr- und/oder Entleerungsventil ansteuern kann.

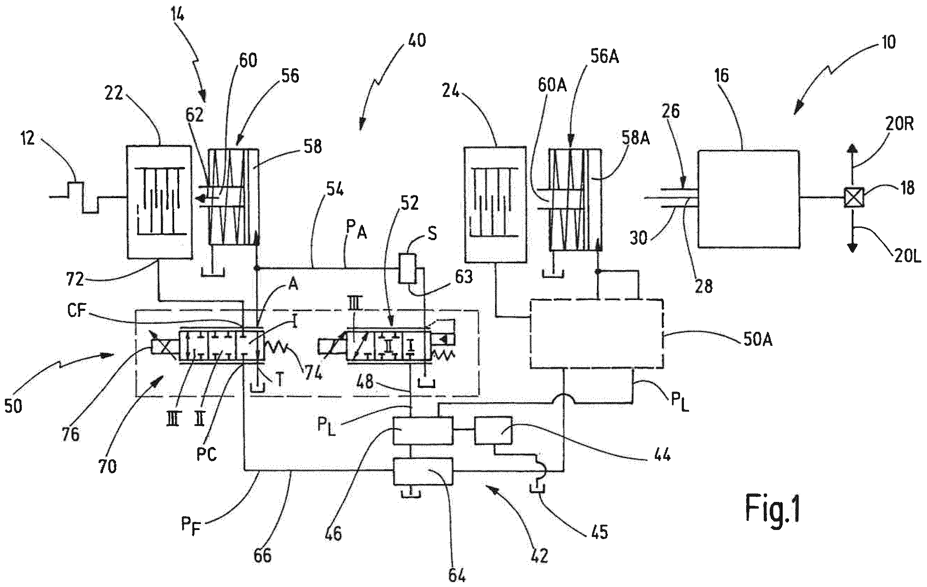

In Fig. 1 ist ein Antriebsstrang für ein Kraftfahrzeug schematisch dargestellt und generell mit 10 bezeichnet. Der Antriebsstrang 10 weist einen Antriebsmotor 12 auf, der beispielsweise einen Verbrennungsmotor beinhalten kann, oder eine Hybrid-Antriebseinheit. Der Antriebsstrang 10 beinhaltet ferner eine Kupplungsanordnung 14, die eingangsseitig mit dem Antriebsmotor 12 verbunden ist, sowie eine Getriebeanordnung 16, deren Eingang mit einem Ausgangsabschnitt der Kupplungsanordnung 14 verbunden ist. Ein Ausgang der Getriebeanordnung 16 ist mit einem Differential 18 verbunden, mittels dessen Antriebsleistung auf angetriebene Räder 20L, 20R verteilbar ist.

Die Kupplungsanordnung 14 ist vorliegend als Doppelkupplungsanordnung ausgebildet, mit einer ersten Reibkupplung 22 und einer zweiten Reibkupplung 24. Die Reibkupplungen 22, 24 sind als nass laufende Lamellenkupplungen ausgebildet und sind in axialer Richtung versetzt zueinander angeordnet. Die Reibkupplungen 22, 24 weisen einen gemeinsamen Eingang (nicht näher dargestellt) auf, der mit dem Ausgang des Antriebsmotors 12 verbunden ist. Ein Ausgang der ersten Reibkupplung 22 ist mit einer Innenwelle 28 einer Eingangswellenanordnung 26 der Getriebeanordnung 16 verbunden. Ein Ausgangsglied der zweiten Reibkupplung 24 ist mit einer Hohlwelle 30 der Eingangswellenanordnung 26 verbunden. Die Getriebeanordnung 16 weist als Doppelkupplungsgetriebe zwei Teilgetriebe auf, von denen eines den geraden Gangstufen zugeordnet ist und das andere den ungeraden Gangstufen. Gangwechsel können erfolgen, indem während einer Fahrt in einer Quellgangstufe in dem anderen Teilgetriebe eine Zielgangstufe eingelegt wird und anschließend eine überschneidende Betätigung der Reibkupplungen 22, 24 erfolgt, um auf diese Weise Gangwechsel ohne Zugkraftunterbrechung durchführen zu können.

Zum Betrieb der Reibkupplungen 22, 24 ist eine Hydraulikanordnung 40 vorgesehen. Die Hydraulikanordnung 40 beinhaltet eine Fluidversorgungseinrichtung 42. Die Fluidversorgungseinrichtung 42 weist eine Pumpenanordnung 44 auf, die Fluid aus einem Niederdruckbereich, insbesondere einem Tank 45 ansaugt. Die Pumpenanordnung 44 kann eine einzelne Pumpe aufweisen, kann jedoch auch mehrere Pumpen beinhalten. Die Pumpenanordnung 44 kann von dem Antriebsmotor 12 angetrieben sein, und/oder von einem der Pumpenanordnung 44 zugeordneten Elektromotor.

Ein Druckanschluss der Pumpenanordnung 44 ist mit einer Arbeitsdruckventilanordnung 46 verbunden, die den von der Pumpenanordnung 44 bereitgestellten Druck auf einen konstanten Leitungsdruck P_{L} regelt. Der Leitungsdruck P_{L} wird auf einer Arbeitsdruckleitung 48 bereitgestellt.

Der ersten Reibkupplung 22 ist eine erste Kupplungsventilanordnung 50 zugeordnet. Eine identische Kupplungsventilanordnung 50A ist der zweiten Reibkupplung 24 zugeordnet. Im Folgenden wird ausschließlich auf die Kupplungsventilanordnung 50 Bezug genommen, wobei die Beschreibung in gleicher Weise auf die Kupplungsventilanordnung 50A anwendbar ist.

Die Kupplungsventilanordnung 50 weist eine Steuerventilanordnung 52 auf, die vorliegend als Kupplungsdruck-Regelventil ausgebildet ist, und zwar in Form eines druckbegrenzten proportionalen 3/3-Wegeventils, das elektromagnetisch ansteuerbar ist. Die Steuerventilanordnung 52 weist drei Positionen I, II, III auf. In der ersten Position I, die mittels einer Federvorspannung eingerichtet wird, wenn die Elektromagnetanordnung nicht bestromt ist, ist eine Durchgangsverbindung zwischen dem Tank 45 und einer Steuerdruckleitung 54 eingerichtet, auf der ein Steuerdruck P_{A} für einen ersten Hydraulikaktuator 56 bereitgestellt wird, der zum Betätigen der ersten Reibkupplung 22 ausgebildet ist.

Ein dritter Anschluss ist mit der Arbeitsdruckleitung 48 verbunden und ist in der ersten Stellung I abgesperrt. In der zweiten Stellung II sind alle Eingänge der Steuerventilanordnung 52 abgesperrt. In der dritten Ventilstellung III ist die Arbeitsdruckleitung 48 mit der Steuerdruckleitung 54 verbunden. In an sich bekannter Weise kann ein derartiges Ventil, das als Proportionalventil ausgebildet ist, den Steuerdruck P_{A} von 0 bis zu einem Maximalwert regeln, indem die Elektromagnetanordnung geeignet bestromt wird. Zu diesem Zweck ist die Elektromagnetanordnung vorzugsweise mit einer in Fig. 1 nicht näher dargestellten übergeordneten Steuereinrichtung in Form eines Getriebe-Steuergerätes oder dergleichen verbunden. Ferner kann die Steuerdruckleitung 54 mit einem Drucksensor versehen sein, um den Steuerdruck P_{A} auf diese Weise rückgekoppelt regeln zu können.

Der erste Hydraulikaktuator 56 weist einen Zylinderraum 58 auf, der mit der Steuerdruckleitung 54 verbunden ist, sowie einen Kolben 60, mittels dessen eine Kolbenkraft 62 auf das Lamellenpaket der ersten Reibkupplung 22 ausgeübt werden kann, um diese erste Reibkupplung 22 zu schließen oder in einem Schlupfzustand zu betreiben.

In manchen Hydraulikanordnungen 40 kann, wie es in Fig. 1 dargestellt ist, zwischen der Steuerventilanordnung 52 und dem Hydraulikaktuator 56 eine Absperrventilanordnung 63 vorgesehen sein, die einen Sperranschluss S aufweist und die Verbindung zwischen der Steuerventilanordnung 52 und dem Hydraulikaktuator 56 entweder freigibt oder unterbricht. Die Absperrventilanordnung 63 kann ggf. ebenfalls mit dem Tank verbunden sein, um in der Absperrposition den Zylinderraum 58 mit einem Niederdruckbereich zu verbinden.

Lamellenkupplungen der oben beschriebenen Art werden auf diese Weise hydraulisch betätigt, müssen jedoch auch hydraulisch gekühlt werden, und zwar mittels eines Kühlfluides. Das Kühlfluid ist vorliegend vorzugsweise das gleiche wie das zur Betätigung der Reibkupplung 22 verwendete Fluid, beispielsweise ein Hydrauliköl.

Zum Zwecke der Kühlung der ersten Reibkupplung 22 beinhaltet die Fluidversorgungseinrichtung 42 ferner eine Kühlfluiddruckventilanordnung 64, die eingangsseitig mit der Arbeitsdruckventilanordnung 46 verbunden ist und die an ihrem Ausgang einen Kühlfluiddruck P_{F} bereitstellt. Ferner kann die Kühlfluidruckventilanordnung 64 dazu ausgebildet sein, einen bestimmten Kühlfluidvolumenstrom bereitzustellen, was in Fig. 1 jedoch nicht näher darstellbar ist.

Der Kühlfluiddruck P_{F} wird auf einer Kühlfluidleitung 66 bereitgestellt, die an die Kühlfluiddruckventilanordnung 64 angeschlossen ist. Ferner beinhaltet die Hydraulikanordnung 40 eine Ventilanordnung 70, die die Funktionen einen Kühlfluidventilanordnung und einer Entleerungsventilanordnung miteinander kombiniert. Mit anderen Worten dient die Ventilanordnung 70 dazu, an einem Kühlstromanschluss CF einen geregelten Kühlfluidstrom bereitzustellen, der einem Zuführanschluss 72 der ersten Reibkupplung 22 zugeführt wird. Der Zuführanschluss 72 speist das Kühlfluid in der Regel radial innen in die erste Reibkupplung 22 ein, von wo aus es aufgrund von Zentrifugalwirkung radial nach außen durch die Lamellenpakete hindurch strömt und schließlich radial nach außen abgespritzt wird, wo es aufgefangen und wieder der Fluidversorgungseinrichtung 42 zugeführt wird, beispielweise über den Tank 45, ggf. auch einem nicht näher bezeichneten Kühler der Fluidversorgungseinrichtung 42.

Die Ventilanordnung 70 ist vorzugsweise als ein einzelnes proportionales Wegeventil ausgebildet, das vorliegend als 4/3-Wegeventil ausgebildet ist. Die Ventilanordnung 70 ist mittels einer Ventilfeder 74 in eine Ventilstellung I vorgespannt. Mittels einer Ventilsteuerung 76, die vorliegend als elektromagnetische Steuerung ausgebildet ist, jedoch auch als hydraulische Ansteuerung ausgebildet sein kann, kann die Ventilanordnung 70 in zwei weitere Ventilstellungen II und III versetzt werden.

Die Ventilanordnung 70 weist einen Kühldruckanschluss PC, einen Tankanschluss T, den oben genannten Kühlstromanschluss CF sowie einen Aktuatoranschluss A auf. Der Aktuatoranschluss A ist mit der Steuerdruckleitung 54 und folglich mit dem Zylinderraum 58 des ersten Hydraulikaktuators 56 verbunden. Der Kühlstromanschluss CF ist, wie gesagt, mit dem Zuführeranschluss 72 der ersten Reibkupplung 22 verbunden. Der Kühldruckanschluss PC ist an die Kühlfluidleitung 66 angeschlossen, an der der Kühlfluiddruck P_{F} bereitgestellt wird. Der Tankanschluss T ist mit dem Tank 45 verbunden.

In der ersten Ventilstellung I ist der Aktuatoranschluss A mit dem Tankanschluss T verbunden. Folglich wird hierdurch eine redundante Entleerungsfunktion des ersten Hydraulikaktuators 56 realisiert. Denn der Zylinderraum 58 ist zum einen über die Steuerventilanordnung 52 mit dem Tank verbunden, wenn sich diese in der Grundstellung I befindet, und zum anderen über die Ventilanordnung 70 mit dem Tank 45 verbunden, wenn sich diese Ventilanordnung 70 in der Ventilstellung I befindet. Folglich kann der Zylinderraum 58 redundant entleert werden und/oder mit einem großen Entleerungsquerschnitt, so dass die Entleerungszeit sehr kurz sein kann.

In der ersten Ventilstellung I der Ventilanordnung 70 sind der Kühldruckanschluss PC und der Kühlstromanschluss CF gegeneinander abgesperrt, so dass der ersten Reibkupplung 22 kein Kühlfluidstrom bereitgestellt wird.

In der weiteren Ventilstellung II sind sämtliche Anschlüsse der Ventilanordnung 70 gegeneinander abgesperrt. In der letzten Ventilstellung III (erste Ventilstellung) sind der Aktuatoranschluss A und der Tankanschluss T gegeneinander abgesperrt. Der Kühldruckanschluss PC und der Kühlstromanschluss CF sind miteinander verbunden. Durch Ansteuerung der Ventilsteuerung 76 kann ein Kühlfluidstrom für den Zuführanschluss 72 bereitgestellt werden, der von 0 (entsprechend der Ventilstellung II) bis zu einem vollen Querschnitt (entsprechend der Ventilstellung III) einstellbar ist, insbesondere auch regelbar ist.

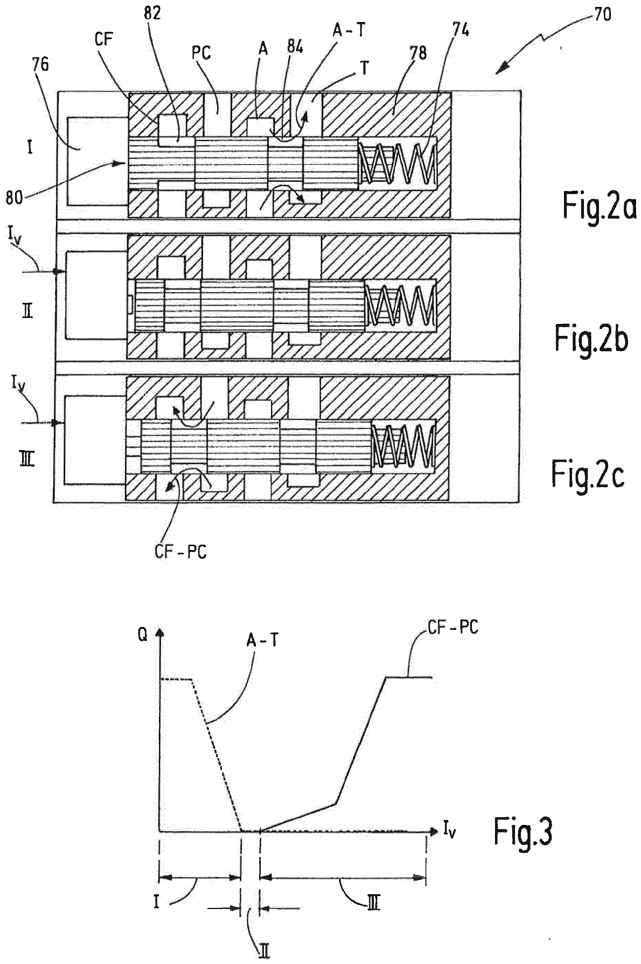

Fig. 2 zeigt eine schematische Längsschnittansicht durch eine Ventilanordnung 70 der oben beschriebenen Art. Fig. 2a zeigt dabei die Ventilstellung I. Fig. 2b zeigt die Ventilstellung II, und Fig. 2c zeigt die Ventilstellung III. Es ist zu erkennen, dass die Ventilanordnung 70 einen einzelnen Ventilschieber 80 aufweist, der an seinem Außenumfang mit zwei axial versetzten Steuernuten 82, 84 ausgebildet ist. Die erste Steuernut 82 dient dazu, in der Ventilstellung III die Anschlüsse PC, CF miteinander zu verbinden. Die zweite Steuernut 84 dient in der Ventilstellung I dazu, die Anschlüsse A, T miteinander zu verbinden, wie es in Fig. 2 generell durch Pfeile dargestellt ist. In der Ventilstellung II sind sämtliche Anschlüsse gegeneinander abgesperrt.

Die Steuernuten 82, 84 und die Anschlussquerschnitte der Anschlüsse A, T, PC, CF sind so aufeinander abgestimmt, dass sich in Abhängigkeit von einem der Ventilsteuerung 76 zugeführten elektrischen Ventilstrom Iᵥ jeweils Querschnitte für die Verbindungen A-T bzw. CF-PC ergeben, wie sie in Fig. 3 durch ein Diagramm dargestellt sind, auf dessen Abszisse der Ventilstrom Iᵥ eingetragen ist, und auf dessen Ordinate der jeweilige Querschnitt Q für die oben genannten Verbindungen dargestellt ist.

Es ist zu erkennen, dass in der Ventilstellung I zunächst ein maximaler Querschnitt eingerichtet ist, der dann linear abfällt, und zwar bis zum Beginn der Ventilsteuerung II, und zwar bedingt durch die kleiner werdende Überschneidung zwischen dem Anschluss A und der zweiten Steuernut 84. Innerhalb der Ventilstellung II ist kein Öffnungsquerschnitt Q eingerichtet. Innerhalb der Ventilstellung III öffnet sich zunächst die Verbindung zwischen den Anschlüssen CF und PC linear mit einer ersten Steigung, die dann in einem mittleren Abschnitt der Ventilstellung III in einen steileren Abschnitt übergeht, bis hin zu einem maximalen Querschnitt, der jenem des Maximalquerschnittes von A-T entsprechen kann.

In den nachfolgenden Figuren werden weitere Ausführungsformen von Hydraulikanordnungen 40 und zugeordneten Ventilanordnungen 70 beschrieben, die hinsichtlich Funktion und Aufbau den in Fig. 1 gezeigten Merkmalen entsprechen. Gleiche Elemente sind daher durch gleiche Bezugszeichen gekennzeichnet. Im Folgenden werden im Wesentlichen die Unterschiede erläutert.

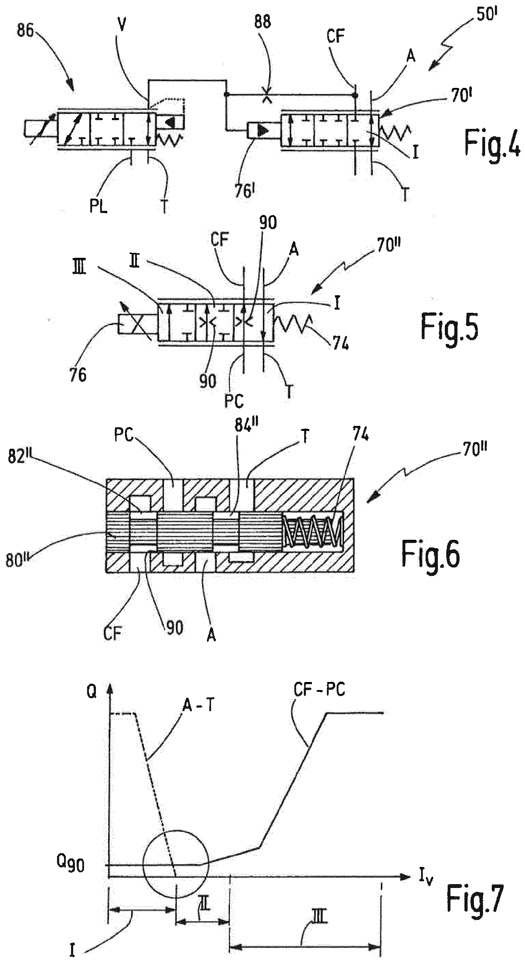

In Fig. 4 ist eine Kupplungsventilanordnung 50' gezeigt, die eine Ventilanordnung 70' aufweist, die das identische Ventil beinhaltet wie die Ventilanordnung 70 der Fig. 1, mit der Ausnahme, dass die Ventilsteuerung 76' eine hydraulische Steuerung ist. Die hydraulische Ventilsteuerung 76' ist mit einem Pilotventil 76 verbunden, genauer mit einem Vorsteueranschluss V des Pilotventils 86, das ebenfalls als druckbegrenztes und federvorgespanntes proportionales Wegeventil ausgebildet ist, insbesondere als elektromagnetisch angesteuertes 3/3-Wegeventil. In einer ersten Stellung des Pilotventils 86 ist der Vorsteueranschluss V mit einem Tankanschluss T verbunden. In einer Arbeitsstellung ist der Vorsteueranschluss V mit einem Arbeitsdruckanschluss PL verbunden, der beispielsweise an die Arbeitsdruckleitung 48 angeschlossen sein kann. Alternativ hierzu kann der Anschluss PL auch an die Kühlfluidleitung 66 angeschlossen sein.

Sofern das Pilotventil 86 nicht elektromagnetisch angesteuert wird, befindet es sich in der Grundstellung, in der der Vorsteueranschluss V mit dem Tank T verbunden ist. Demzufolge befindet sich die Ventilanordnung 70' ebenfalls in der Ventilstellung I.

Mittels des Pilotventils 86 kann die gleiche Charakteristik für die Ventilanordnung 70' eingestellt werden, wie sie in Fig. 3 dargestellt ist. Zusätzlich ist jedoch in Fig. 4 optional vorgesehen, dass der Vorsteueranschluss V des Pilotventils 86 über eine Blende 88 mit dem Kühlstromanschluss CF verbunden ist. Hierdurch kann die Regelbarkeit des Kühlfluidstromes verbessert werden.

Generell hat die Verwendung eines Pilotventils 86 zur Ansteuerung der Ventilanordnung 70 den Vorteil, dass größere Stellkräfte und längere Schiebewege ermöglicht werden. Es können daher größere Volumenströme bzw. noch größere Öffnungshübe ermöglicht werden.

Der in der Arbeitsventilstellung des Pilotventils 86 eingerichtete Steuerfluidvolumenstrom, der aus dem Vorsteueranschluss V austritt, kann über die Blende 88 dem Kühlfluidvolumenstrom hinzugefügt werden, der von der Ventilanordnung 70' an dem Kühlstromanschluss CF bereitgestellt wird.

Das Pilotventil 86 ist vorliegend als proportionales Wegeventil bzw. Schieberventil ausgebildet, kann jedoch auch als Druckregelventil in Schieberbauweise oder als Druckregelventil in Sitzbauweise realisiert werden.

Eine in Fig. 5 gezeigte Ventilanordnung 70" entspricht hinsichtlich Aufbau und Funktionsweise der Ventilanordnung 70 der Fig. 1. In den Ventilstellungen I und II ist jedoch zwischen dem Kühldruckanschluss PC und dem Kühlstromanschluss CF eine Blendenfunktion eingerichtet, die durch eine Blende 90 in Fig. 5 schematisch angedeutet ist.

Fig. 6 zeigt eine schematische Längsschnittansicht durch die Ventilanordnung 70" der Fig. 5, wobei die Blende 90 durch eine sehr kleine Umfangsnut an dem Ventilschieber 80" angedeutet ist.

Mittels der Blende 90 kann folglich auch in den Ventilstellungen I und II jeweils ein Grund-Kühlfluidvolumenstrom an dem Kühlstromanschluss CF bereitgestellt werden. Dies ist in Fig. 7 in einem Diagramm dargestellt, das jenem der Fig. 3 entspricht, wobei der durch die Blende 90 eingerichtete Grund-Kühlstrom bei Q₉₀ schematisch angedeutet ist.

Durch diese Maßnahme kann eine Grundkühlungsblende, die in der Regel fest in einer Ventilplatte integriert ist, entfallen, so dass weniger Aufwand entsteht, Fluidkanäle in eine Ventilplatte zu integrieren.

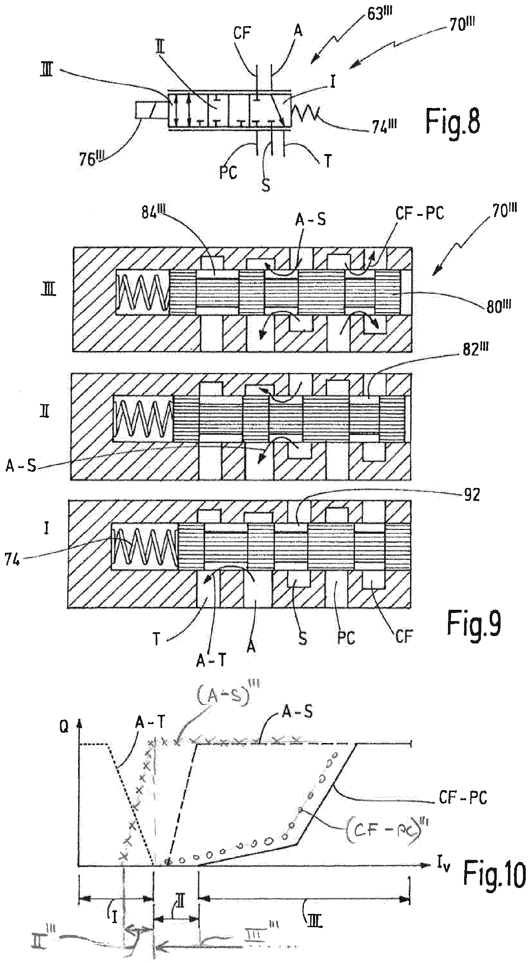

Eine weitere Ausführungsform einer Ventilanordnung 70"' ist in den Fig. 8 bis 10 dargestellt.

In dieser Ausführungsform ist die Ventilanordnung 70'" als proportionales 5/3-Wegeventil bzw. -Schieberventil ausgebildet, mit einem zusätzlichen Sperranschluss S. Ferner beinhaltet der Ventilschieber 80 in diesem Fall eine dritte Steuernut 92.

Wie es in Fig. 10 gezeigt ist, ist die Funktion hinsichtlich der Öffnungsquerschnitte A-T und CF-PC identisch zu jener der Ventilanordnung 70 der Fig. 1 bis 3.

Durch den weiteren Sperranschluss S und die dritte Steuernut 92 kann jedoch in der mittleren Ventilstellung II und in der Kühl-Ventilstellung III eine unmittelbare Verbindung zwischen dem Aktuatoranschluss A und dem Sperranschluss S eingerichtet werden, wie es in Fig. 10 durch einen Querschnitt A-S dargestellt ist, der im Bereich der mittleren Ventilstellung II linear bis auf einen Maximalwert ansteigt und dann über die mittlere Ventilstellung II und die dritte Ventilstellung III konstant auf dem Maximalwert bleibt.

Der Vorteil der Ventilanordnung 70'" besteht darin, dass in der Grund-Ventilstellung I der Aktuatoranschluss A komplett von dem Sperranschluss S getrennt ist, wobei der Sperranschluss S vorzugsweise mit dem Steuerdruckanschluss der Steuerventilanordnung 52 verbunden ist.

In der Grund-Ventilstellung I ist bei der Ventilanordnung 70'" daher der Aktuatoranschluss A auf den Tankanschluss T gelegt, so dass eine Schnellentleerfunktion alleine über den Ventilschieber 80'" der Ventilanordnung 70"' erfolgt. Mit anderen Worten kann bei dieser Variante der Steuerdruckanschluss der Steuerventilanordnung 52 in der Grundstellung I gegenüber dem Tank abgesperrt sein. Hierdurch kann der Zylinderraum 58 hermetisch von dem Regeldruck der Steuerventilanordnung 52 getrennt werden, und es gibt auch keinerlei Staudruck in dem Zylinderraum 58.

Die Ventilanordnung 70'" hat daher die Funktion einer Absperrfunktion, entsprechend der Absperrventilanordnung 63 der Fig. 1.

In Fig. 10 ist ferner ein alternatives Diagramm von Öffnungsquerschnitten über elektrischem Ventilstrom bzw. über der Schieberposition für eine Ventilanordnung gezeigt, die eine Modifikation der Ventilanordnung der Fig. 8 und 9 darstellt. Bei diesem Diagramm, wie auch bei entsprechenden anderen oben erörterten Diagrammen, ist wegen der grundlegenden "Strom-Position-Proportionalität eines Wegeventils" das Q-I-Diagramm nicht nur eine Darstellung von Öffnungsquerschnitten des Ventils über dem elektrischen Strom, sondern auch eine Darstellung der Öffnungsquerschnitte über der Schieberposition. Die x-Achse könnte also ergänzend auch als Positionsachse bezeichnet werden.

Bei der modifizierten Ventilanordnung sind die Grund-Ventilstellung I und die mittlere Ventilstellung II"' überlappend ausgebildet, so dass der Bereich der Kühl-Ventilstellung III"' näher an den Bereich der Grund-Ventilstellung I heranrücken kann. Hierdurch kann der Arbeitshub der Ventilsteuerung 76'" (siehe Fig. 8) gegenüber der Ausführungsform der Fig. 8 und 9 verkleinert werden.

In Fig. 10 ist für diese Modifikation gezeigt, dass in dem Überlappungsbereich, der in Fig. 10 mit II"' dargestellt ist, sowohl die Verbindung A-T teilweise geöffnet ist als auch die Verbindung A-S"'. Mit anderen Worten sind in der Ventilstellung II"' sowohl der Aktuatoranschluss A mit dem Tankanschluss T verbunden, als auch der Aktuatoranschluss A mit dem Sperranschluss S.

Dieser mittlere Ventilbereich II"' wird jedoch im Betrieb dieser modifizierten Ventilanordnung lediglich sprungförmig durchfahren bzw. "übersprungen". Denn im Betrieb wird diese modifizierte Ventilanordnung 70 entweder stromlos am linken Anschlag betrieben, entsprechend der Ventilstellung I bzw. der Darstellung der Fig. 9, so dass ausschließlich die Verbindung zwischen dem Aktuatoranschluss A und dem Tankanschluss T hergestellt ist.

Andererseits wird die Ventilanordnung 70 in der modifizierten Variante dann innerhalb des Bereiches der Ventilstellung III mittels der Ventilsteuerung 76'" so angesteuert, dass der Kühldruckanschluss PC und der Kühlstromanschluss CF über die in Fig. 10 gezeigte Kennlinie (CF-PC)'" miteinander verbunden sind.

Der Überlappungsbereich II"' ist folglich in jedem Fall kleiner als der Bereich der Grund-Ventilstellung I, und zwar derart, dass in der stromlosen Stellung vorzugsweise ausschließlich der Aktuatoranschluss A mit dem Tankanschluss T verbunden ist, der Aktuatoranschluss A jedoch nicht mit dem Sperranschluss S verbunden ist.

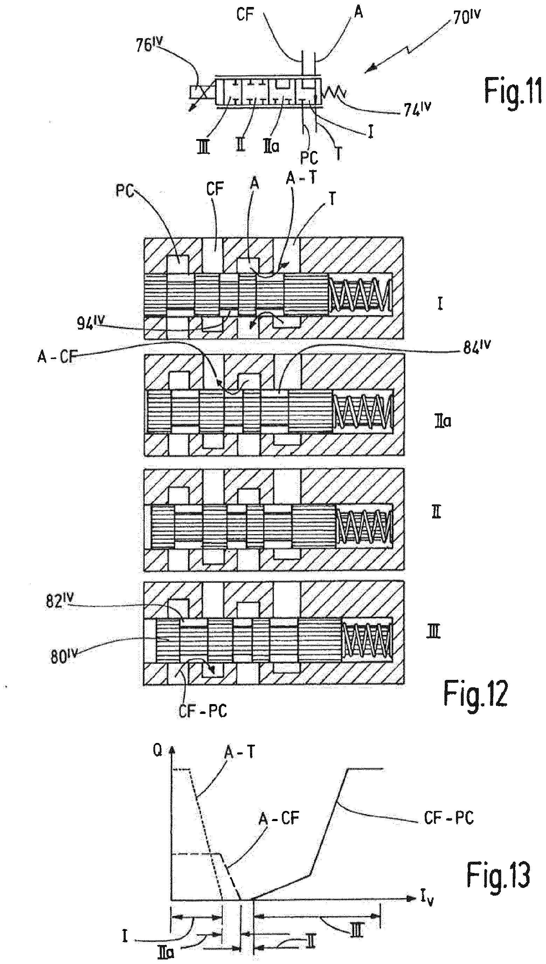

In den Fig. 11 bis 13 ist eine weitere Ausführungsform einer Ventilanordnung 70^{IV} gezeigt, wobei zwischen der ersten Steuernut 82^{IV} und der zweiten Steuernut 84^{IV} eine dritte Steuernut 94^{IV} vorgesehen ist, die in der Grund-Ventilstellung I sowie in einer weiteren Ventilstellung IIa, die zwischen den Ventilstellungen I, II liegt, den Aktuatoranschluss A mit dem Kühlstromanschluss CF verbindet, wie es in Fig. 12 bei IIa durch einen Fluidstrompfeil A-CF angedeutet ist und wie es in Fig. 13 bei A-CF angedeutet ist. Der maximale Querschnitt der Verbindung A-CF ist deutlich kleiner als jener der Verbindungen A-T und CF-PC in den anderen Ventilstellungen.

Mit anderen Worten wird hierbei innerhalb der Grund-Ventilstellung und in der Zwischen-Ventilstellung IIa eine Art Leckage A-CF eingerichtet, die positiv beim Regeln kleiner Drücke (kleine Momente, Komfortbetrieb bzw. Kriechen des Fahrzeugs) genutzt werden kann, da hierdurch die hydraulische Dämpfung des Gesamtsystems verändert werden kann.

In einer bevorzugten Ausführungsform befinden sich die maßgeblichen Steuerkanten PC-CF und A-CF auf dem Arbeitsanschluss (Tasche) CF, und befinden sich auf dem Ventilschieber 80^{IV} an einem Schieberabsatz. Folglich ist die Toleranzkette klein und die Position des Ventilschiebers 80^{IV} lässt sich durch Analyse des Kupplungsdruckes bzw. Steuerdruckes P_{A} bestimmen (sofern ein Sensor vorhanden ist). Folglich lässt sich auch mit hoher Genauigkeit ein Öffnungspunkt des Anschlusses von A an CF bestimmen.

Bei der Ausführungsform der Ventilanordnung 70^{IV} ist der Aktuatoranschluss A in der Grund-Ventilposition I mit dem Tank verbunden, entleert also in diesen, und mit dem Kühlstromanschluss CF verbunden, und kann folglich auch in diesen hinein entleeren.

In der Zwischenstellung IIa, die auch als Leckagestellung bezeichnet werden kann, ist die Verbindung zwischen dem Aktuatoranschluss A und dem Tankanschluss T geschlossen. Eine Verbindung zwischen dem Aktuatoranschluss A und dem Kühlstromanschluss CF ist noch vorhanden, der Kühlstromanschluss CF ist jedoch noch von dem Kühldruckanschluss getrennt.

In der Mittelstellung II sind alle Verbindungen geschlossen, wobei die Verbindung CF-PC beginnt, sich zu öffnen.

In der Maximalkühlungs-Ventilposition III ist der Aktuatoranschluss weder mit dem Tankanschluss T noch mit dem Kühlstromanschluss CF verbunden. Der Kupplungskühlungsquerschnitt CF-PC ist jedoch voll geöffnet.

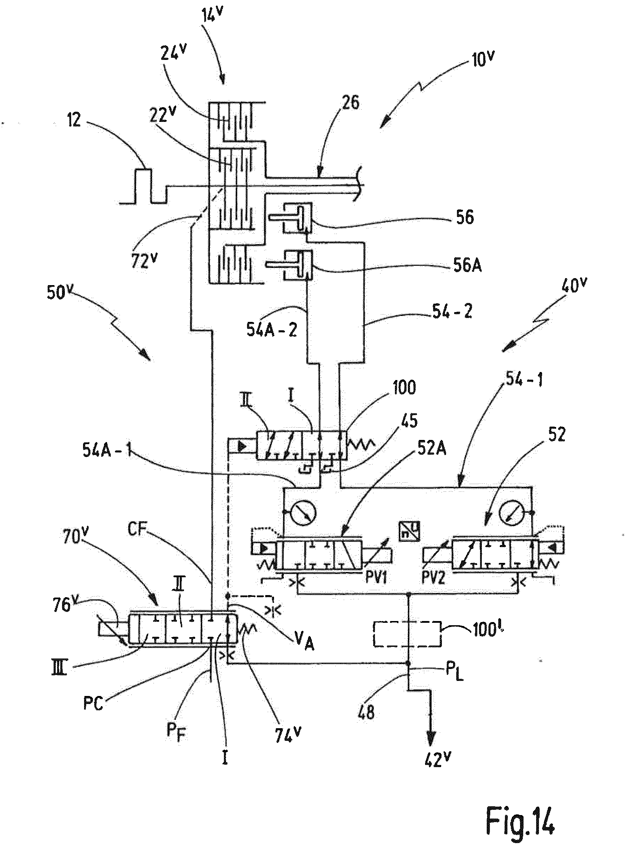

In Fig. 14 ist ein weiterer Antriebsstrang 10^{V} dargestellt, bei dem eine Kupplungsanordnung 14^{V} vorgesehen ist, die eine erste Reibkupplung 22^{V} und eine zweite Reibkupplung 24^{V} aufweist. Die Reibkupplungen 22^{V}, 24^{V} sind radial ineinander verschachtelt, also nicht, wie bei der Ausführungsform der Fig. 1, axial versetzt zueinander angeordnet.

Dies bedingt, dass die zwei Reibkupplungen 22^{V}, 24^{V} über einen gemeinsamen Zuführanschluss 72^{V} kühlbar sind. Allerdings können die zwei Reibkupplungen 22^{V}, 24^{V} unabhängig voneinander angesteuert werden, über jeweilige Hydraulikaktuatoren 56, 56A und zugeordnete Steuerventilanordnungen 52, 52A, deren Funktionsweise dem Grunde nach ähnlich ist wie bei den obigen Ausführungsformen.

Bei der Ausführungsform der Fig. 14 ist eine Ventilanordnung 70^{V} vorgesehen, die ein Ventil beinhaltet, das vom Aufbau her identisch sein kann zu dem Ventil 70 der Fig. 1. Hinsichtlich der Anschlüsse PC und CF ist die Funktion zudem identisch, so dass das Ventil der Ventilanordnung 70^{V} als Kühlfluidventilanordnung verwendbar ist.

Anstelle des Aktuatoranschlusses A weist die Ventilanordnung 70^{V} einen Vorsteueranschluss V_{A} auf, der mit einer Ventilsteuerung eines Sperr- und/oder Entleerungsventils 100 verbunden ist.

Das Sperr- und/oder Entleerungsventil 100 weist zwei Ventilstellungen auf. In einer Grundstellung, die in Fig. 14 dargestellt ist und die mittels einer nicht näher bezeichneten Ventilfeder eingerichtet ist, sind die Steueranschlüsse der Steuerventilanordnungen 52 mit den Hydraulikaktuatoren 56, 56A verbunden. Die Steuerdruckleitungen sind hierbei aufgeteilt in erste Steuerdruckleitungen 54-1, 54A-1, die von den Steuerventilanordnungen 52, 52A bis zu dem Sperr- und/oder Entleerungsventil 100 führen, und in zweite Steuerdruckleitungen 54-2, 54A-2, die von dem Sperr- und/oder Entleerungsventil 100 hin zu den Hydraulikaktuatoren 56, 56A führen.

In den Ventilpositionen II, III der Ventilanordnung 70^{V} ist der Vorsteueranschluss V_{A} abgesperrt, so dass sich das Sperr- und/oder Entleerungsventil 100 in der in Fig. 14 gezeigten Grundposition befindet, bei der die Steuerdruckleitungen 54 durchgängig sind.

Sofern sich die Ventilanordnung 70^{V} in der Grundposition I befindet, ist der Vorsteuerventilanschluss V_{A} mit der Arbeitsdruckleitung 48 verbunden, an der der Arbeitsdruck P_{L} bereitgestellt wird, vorzugsweise jedoch über eine nicht näher bezeichnete Blende.

Folglich wird die Sperr- und/oder Entleerungsventilanordnung 100 in die zweite Ventilposition II versetzt, in der die zweiten Steuerdruckleitungsabschnitt 54-2, 54A-2 bzw. die Hydraulikaktuatoren 56, 56A jeweils mit dem Tank 45 verbunden werden. Die Hydraulikaktuatoren 56, 56A können auf diese Weise gut entleert werden. Ferner sind die Hydraulikaktuatoren 56, 56A in dieser Position von den Steuerventilanordnungen 52, 52A abgetrennt.

Der Vorsteueranschluss V_{A} kann über eine Blende mit dem Tank verbunden sein, um die Regelbarkeit zu verbessern.

In gleicher Weise können Arbeitsdruckanschlüsse der Steuerventilanordnungen 52, 52A über Blenden mit der Arbeitsdruckleitung 48 verbunden sein.

Das Sperr- und/oder Entleerungsventil 100 kann anstelle einer Anordnung zwischen den Steuerventilanordnungen 52, 52A und den zugeordneten Hydraulikaktuatoren 56, 56A auch zwischen der Fluidversorgungseinrichtung 42^{V} und den Steuerventilanordnungen 52, 52A angeordnet sein, wie es in Fig. 14 schematisch bei 100' angedeutet ist. In diesem Fall hat das Sperr- und/oder Entleerungsventil 100' eine reine Sperrfunktion, indem in einer Sperrposition überhaupt kein Hydraulikdruck zu den Steuerventilanordnungen 52, 52A gelangt und folglich auch nicht hin zu den Aktuatoren 56, 56A. Eine Entleerung findet in diesem Fall über die Steuerventilanordnungen 52, 52A statt, ähnlich wie bei der Ausführungsform der Fig. 1, eine redundante Entleerung ist hierbei jedoch nicht vorgesehen.

In diesem Falle hat das Sperr- und/oder Entleerungsventil 100' eine Sperrfunktion, wohingegen das Sperr- und/oder Entleerungsventil 100 im Wesentlichen eine Entleerungsfunktion hat, jedoch auch eine Sperrfunktion beinhaltet.

Das Ventil 100' kann einfacher aufgebaut sein als das Ventil 100, da es als einfaches 2/2-Wegeventil ausgebildet sein kann, wohingegen das Ventil 100 als 6/2-Wegeventil ausgebildet ist.

Die Verwendung des Ventils 100' hat den Vorteil, dass aus der Fluidversorgungseinrichtung 42^{V} überhaupt kein Steuerfluidstrom entnommen wird, was sich positiv auf die hydraulischen Verluste auswirken kann.

Die Ventile 70^{V} und 100 (bzw. 100') bilden gemeinsam eine Ventilanordnung, die eine Kühlfluidventilanordnung 50^{V} und eine Entleerungsventilanordnung miteinander kombiniert.

## Patentansprüche

1. Hydraulikanordnung (40) für einen Kraftfahrzeugantriebsstrang (12), der eine mit Kühlfluid zu versorgende und mittels eines Hydraulikaktuators (56) zu betätigende Komponente (14) aufweist, insbesondere eine nass laufende Lamellenkupplungsanordnung (14), mit
- einer Fluidversorgungseinrichtung (42);
- einer Steuerventilanordnung (52), die an die Fluidversorgungseinrichtung (42) angeschlossen ist und dazu ansteuerbar ist, den Hydraulikaktuator (56) mit einem Steuerdruck (P_{A}) zu versorgen, um die Komponente (14) zu betätigen; und
- einer Kühlfluidventilanordnung, die an die Fluidversorgungseinrichtung (42) angeschlossen ist und dazu ansteuerbar ist, um die Komponente (14) bei Bedarf an einem Kühlanschluss (72) mit Kühlfluid zu versorgen;
wobei die Hydraulikanordnung (40) ferner eine Entleerungsventilanordnung aufweist, die an den Hydraulikaktuator (56) angeschlossen ist und bei Bedarf den Hydraulikaktuator (56) entleert, wobei die Kühlfluidventilanordnung und die Entleerungsventilanordnung ein gemeinsames Ventil (70) aufweisen, das in einer ersten Ventilstellung (III) die Fluidversorgungseinrichtung (42) mit der Komponente (14) verbindet, um diese mit Kühlfluid zu versorgen, und das in einer zweiten Ventilstellung (I) den Hydraulikaktuator (56) mit einem Niederdruckbereich (45) verbindet, um den Hydraulikaktuator (56) zu entleeren,
**dadurch gekennzeichnet, dass**
das gemeinsame Ventil (70) eine zwischen der ersten Ventilstellung (III) und der zweiten Ventilstellung (I) liegende dritte Ventilstellung (II) aufweist, so dass ein Kühlfluidstrom von 0 entsprechend der dritten Ventilstellung (II) bis zu einem vollen Querschnitt entsprechend der ersten Ventilstellung (III) einstellbar ist.

2. Hydraulikanordnung nach Anspruch 1, **dadurch gekennzeichnet, dass** das gemeinsame Ventil (70) einen einzelnen Ventilschieber (80) aufweist, der in die erste oder in die zweite Ventilstellung (III, I) versetzbar ist.

3. Hydraulikanordnung nach einem der Ansprüche 1 - 2, **dadurch gekennzeichnet, dass** die Hydraulikanordnung (40) eine Absperrventilanordnung (63) aufweist, mittels der die Steuerventilanordnung (52) gegenüber der Fluidversorgungseinrichtung (42) absperrbar ist.

4. Hydraulikanordnung nach Anspruch 3, **dadurch gekennzeichnet, dass** die Absperrventilanordnung (63"') in das gemeinsame Ventil (70"') integriert ist.

5. Hydraulikanordnung nach einem der Ansprüche 1 - 4, **dadurch gekennzeichnet, dass** das gemeinsame Ventil (70) elektromagnetisch gesteuert ist oder mittels eines Pilotventils hydraulisch gesteuert ist.

6. Hydraulikanordnung nach einem der Ansprüche 1 - 5, **dadurch gekennzeichnet, dass** in einer weiteren Ventilstellung (IIa) eine Verbindung zwischen dem Hydraulikaktuator (56) und dem Kühlanschluss (72) hergestellt ist.

7. Hydraulikanordnung nach einem der Ansprüche 1 - 6, **dadurch gekennzeichnet, dass** das gemeinsame Ventil (70) als 4/3-Wegeventil (70; 70'; 70") oder als 5/3-Wegeventil (70"') oder als 4/4-Wegeventil (70^{IV}) ausgebildet ist.

8. Hydraulikanordnung (40^{V}) nach dem Oberbegriff des Anspruchs 1 oder nach einem der Ansprüche 1 - 7, **dadurch gekennzeichnet, dass** die Kühlfluidventilanordnung (50^{V}) und eine Vorsteuerventilanordnung ein gemeinsames Ventil (70^{V}) aufweisen, das in einer ersten Ventilstellung (III) die Fluidversorgungseinrichtung (42^{V}) mit der Komponente (14^{V}) verbindet, um diese mit Kühlfluid zu versorgen, und das in einer zweiten Ventilstellung (I) ein Sperr- und/oder Entleerungsventil (100) ansteuert, das die Steuerventilanordnung (52) absperrt, und/oder dazu ansteuert, dass das Sperr- und/oder Entleerungsventil den Hydraulikaktuator (56) entleert.

9. Antriebsstrang (10) mit einer nass laufenden Lamellenkupplung (14) und einer Hydraulikanordnung (40) nach einem der Ansprüche 1 - 8.

10. Verfahren zum Betreiben einer Komponente (14) eines Antriebsstranges (10), die mit Kühlfluid zu versorgen und mittels eines Hydraulikaktuators (56) zu betätigen ist, mit einer Hydraulikanordnung (40) nach einem der Ansprüche 1 - 8, mit den Schritten:
- ein Ventil (70) dazu anzusteuern, die Komponente (14) mit Kühlfluid zu versorgen, wenn die Komponente (14) einen Bedarf an Kühlfluid hat; und
- dasselbe Ventil (70') dazu zu verwenden, den Hydraulikaktuator (56) zu entleeren, wenn die Komponente (14) zu entlasten ist.

## Claims

1. Hydraulic assembly (40) for a motor vehicle drive train (12) which has a component (14) which is to be supplied with cooling fluid and is to be actuated by means of a hydraulic actuator (56), in particular a wet-running multiple disc clutch assembly (14), having
- a fluid supply device (42);
- a control valve assembly (52) which is connected to the fluid supply device (42) and can be actuated to supply the hydraulic actuator (56) with a control pressure (P_{A}), in order to actuate the component (14); and
- a cooling fluid valve assembly which is connected to the fluid supply device (42) and can be actuated to supply the component (14) with cooling fluid as required at a cooling connector (72);
the hydraulic assembly (40) having, furthermore, an emptying valve assembly which is connected to the hydraulic actuator (56) and empties the hydraulic actuator (56) as required, the cooling fluid valve assembly and the emptying valve assembly having a common valve (70) which, in a first valve position (III), connects the fluid supply device (42) to the component (14), in order to supply the latter with cooling fluid, and which, in a second valve position (I), connects the hydraulic actuator (56) to a low pressure region (45), in order to empty the hydraulic actuator (56),
**characterized in that**
the common valve (70) has a third valve position (II) which lies between the first valve position (III) and the second valve position (I), with the result that a cooling fluid flow can be adjusted from 0 in accordance with the third valve position (II) up to a full cross section in accordance with the first valve position (III).

2. Hydraulic assembly according to Claim 1, **characterized in that** the common valve (70) has a single valve slide (80) which can be set into the first or into the second valve position (III, I).

3. Hydraulic assembly according to either of Claims 1 and 2, **characterized in that** the hydraulic assembly (40) has a shut-off valve assembly (63), by means of which the control valve assembly (52) can be shut off with respect to the fluid supply device (42).

4. Hydraulic assembly according to Claim 3, **characterized in that** the shut-off valve assembly (63"') is integrated into the common valve (70"').

5. Hydraulic assembly according to one of Claims 1 to 4, **characterized in that** the common valve (70) is controlled electromagnetically or is controlled hydraulically by means of a pilot valve.

6. Hydraulic assembly according to one of Claims 1 to 5, **characterized in that**, in a further valve position (IIa), a connection is established between the hydraulic actuator (56) and the cooling connector (72).

7. Hydraulic assembly according to one of Claims 1 to 6, **characterized in that** the common valve (70) is configured as a 4/3-way valve (70; 70'; 70") or as a 5/3-way valve (70"') or as a 4/4-way valve (70^{IV}).

8. Hydraulic assembly (40^{V}) according to the precharacterizing clause of Claim 1 or according to one of Claims 1 to 7, **characterized in that** the cooling fluid valve assembly (50^{V}) and a pilot control valve assembly have a common valve (70^{V}) which, in a first valve position (III), connects the fluid supply device (42^{V}) to the component (14^{V}), in order to supply the latter with cooling fluid, and which, in a second valve position (I), actuates a shut-off and/or emptying valve (100) which shuts off the control valve assembly (52), and/or actuates it such that the shut-off and/or emptying valve empties the hydraulic actuator (56).

9. Drive train (10) having a wet-running multiple disc clutch (14) and a hydraulic assembly (40) according to one of Claims 1 to 8.

10. Method for operating a component (14) of a drive train (10), which component (14) is to be supplied with cooling fluid and is to be actuated by means of a hydraulic actuator (56), having a hydraulic assembly (40) according to one of Claims 1 to 8, having the steps:
- actuating a valve (70) to supply the component (14) with cooling fluid when the component (14) has a requirement for cooling fluid; and
- using the same valve (70') to empty the hydraulic actuator (56) if the component (14) is to be relieved.

## Revendications

1. Système hydraulique (40) pour une transmission de véhicule automobile (12), qui présente un composant (14) à alimenter en fluide de refroidissement et à actionner au moyen d'un actionneur hydraulique (56), en particulier un système d'embrayage multidisque à fonctionnement humide (14), avec
- un dispositif d'alimentation en fluide (42);
- un système de soupapes de commande (52), qui est raccordé au dispositif d'alimentation en fluide (42) et qui peut être commandé pour alimenter l'actionneur hydraulique (56) avec une pression de commande (P_{A}) afin d'actionner le composant (14); et
- un système de soupapes de fluide de refroidissement, qui est raccordé au dispositif d'alimentation en fluide (42) et qui peut être commandé pour alimenter le composant (14) en fluide de refroidissement en cas de besoin à un raccord de refroidissement (72);
dans lequel le système hydraulique (40) présente en outre un système de soupapes de vidange, qui est raccordé à l'actionneur hydraulique (56) et qui au besoin vide l'actionneur hydraulique (56), dans lequel le système de soupapes de fluide de refroidissement et le système de soupapes de vidange présentent une soupape commune (70), qui dans une première position de soupape (III) relie le dispositif d'alimentation en fluide (42) au composant (14), afin d'alimenter celui-ci en fluide de refroidissement, et qui dans une deuxième position de soupape (I) relie l'actionneur hydraulique (56) à une région à basse pression (45), afin de vider l'actionneur hydraulique (56),
**caractérisé en ce que** la soupape commune (70) présente une troisième position de soupape (II), située entre la première position de soupape (III) et la deuxième position de soupape (I), de telle manière qu'un courant de fluide de refroidissement puisse être réglé de 0 correspondant à la troisième position de soupape (II) à une section transversale totale correspondant à la première position de soupape (III).

2. Système hydraulique selon la revendication 1, **caractérisé en ce que** la soupape commune (70) présente un tiroir de soupape unique (80), qui peut être déplacé dans la première ou dans la deuxième position de soupape (III, I).

3. Système hydraulique selon une des revendications 1 à 2, **caractérisé en ce que** le système hydraulique (40) présente un système de soupapes d'arrêt (63), au moyen duquel le système de soupapes de commande (52) peut être fermé par rapport au dispositif d'alimentation en fluide (42).

4. Système hydraulique selon la revendication 3, **caractérisé en ce que** le système de soupapes d'arrêt (63"') est intégré dans la soupape commune (70"').

5. Système hydraulique selon l'une quelconque des revendications 1 à 4, **caractérisé en ce que** la soupape commune (70) est commandée par voie électromagnétique ou est commandée par voie hydraulique au moyen d'une soupape pilote.

6. Système hydraulique selon l'une quelconque des revendications 1 à 5, **caractérisé en ce que** dans une autre position de soupape (IIa), une liaison est établie entre l'actionneur hydraulique (56) et le raccord de refroidissement (72).

7. Système hydraulique selon l'une quelconque des revendications 1 à 6, **caractérisé en ce que** la soupape commune (70) est une soupape à 4/3 voies (70; 70'; 70") ou une soupape à 5/3 voies (70"') ou une soupape à 4/4 voies (70^{IV}).

8. Système hydraulique (40^{V}) selon le préambule de la revendication 1 ou selon l'une quelconque des revendications 1 à 7, **caractérisé en ce que** le système de soupapes de fluide de refroidissement (50^{V}) et un système de soupapes de commande pilotes présentent une soupape commune (70^{V}), qui dans une première position de soupape (III) relie le dispositif d'alimentation en fluide (42^{V}) au composant (14^{V}), afin d'alimenter celui-ci en fluide de refroidissement, et qui dans une deuxième position de soupape (I) commande une soupape d'arrêt et/ou de vidange (100), qui ferme le système de soupapes de commande (52), et/ou la commande dans le but que la soupape d'arrêt et/ou de vidange vide l'actionneur hydraulique (56).

9. Transmission (10) avec un embrayage multidisque à fonctionnement humide (14) et un système hydraulique (40) selon l'une quelconque des revendications 1 à 8.

10. Procédé de fonctionnement d'un composant (14) d'une transmission (10), qui doit être alimenté en fluide de refroidissement et qui doit être actionné au moyen d'un actionneur hydraulique (56), avec un système hydraulique (40) selon l'une quelconque des revendications 1 à 8, comprenant les étapes suivantes:
- commander une soupape (70) pour alimenter le composant (14) en fluide de refroidissement, lorsque le composant (14) présente un besoin de fluide hydraulique; et
- utiliser la même soupape (70'), pour vider l'actionneur hydraulique (56), lorsque le composant (14) doit être déchargé.
